# EUROPÄISCHE PATENTSCHRIFT

(11) **EP 0 609 769 B1**
(45) Veröffentlichungstag und Bekanntmachung des Hinweises auf die Patenterteilung: **22.11.2000**
(21) Anmeldenummer: 94101161.1
(22) Anmeldetag: 27.01.1994
(51) Int. Cl.: G03C 5/395, G03C 7/30, C02F 1/28

(54) **Verfahren und Vorrichtung zur Waschwasserrückführung bei der photographischen Verarbeitung**
Method and apparatus for recycling wash water in photographic processing
Méthode et appareil pour recycler l'eau de lavage au traitement photographique

(30) Priorität: 05.02.1993 DE 4303379
(43) Veröffentlichungstag der Anmeldung: 10.08.1994
(73) Patentinhaber: AGFA-GEVAERT N.V., 2640 Mortsel (BE)
(72) Erfinder: Honrath, Ute, Dr., D-63263 Neu-Isenburg (DE); Bode, Udo, Dr., D-63303 Dreieich (DE); Sandner, Helmut, D-63110 Rodgau (DE)

(56) Entgegenhaltungen:
- EP-A- 0 566 181
- DE-A- 2 733 835
- DATABASE WPI Week 8006 Derwent Publications Ltd., London, GB; AN 80-10523c XP002024840 & JP-A-50 126 420 (FUJI PHOTO FILM KK)
- PATENT ABSTRACTS OF JAPAN vol. 7, no. 220 (P-226), 30.September 1983 & JP-A-58 111945 (TOKUYAMA SODA KK)

## Beschreibung

Die Erfindung betrifft ein Verfahren und eine Vorrichtung zur kontinuierlichen Rückführung des Waschwassers zum wiederholten Gebrauch bei der Verarbeitung von photographischen Silberhalogenid-Aufzeichnungsmaterialien, insbesondere bei der Verarbeitung mit automatischen Entwicklungsmaschinen.

In der üblicherweise letzten Stufe bei der Verarbeitung von photographischen Materialien werden die löslichen Salze und organischen Verbindungen, die von der hydrophilen Schicht aus den Verarbeitungsbädern mitgeschleppt wurden, durch eine Wässerung entfernt, da sie beim Verbleiben in der Schicht nach dem Trocknen das Aussehen und die Lagerbeständigkeit der Bilder beeinträchtigen würden. Das dabei anfallende Abwasser enthält neben anderen Verunreinigungen typischerweise Thiosulfate in Konzentrationen von Zehntelgramm und Silber in Mengen von Milligramm je Liter. Da solches Wasser nicht ohne Nachbehandlung in die Kanalisation geleitet werden darf, versucht man seit einiger Zeit, das gebrauchte Waschwasser in den Verarbeitungsprozeß zurückzuführen. Dazu muß es soweit nötig von störenden Verunreinigungen befreit werden.

Aus der EP 04 97 199-A1 ist ein Verfahren zur Waschwasserrückführung bekannt. Dabei wird das von der Entwicklungsmaschine kommende gebrauchte Waschwasser filtriert und durch Zusatz von Hilfschemikalien die störenden Verbindungen in solche umgewandelt, die mit dem Film verträglich sind. Als Hilfschemikalien werden beispielsweise Weinsäure, EDTA, Formaldehyd, Natriumbicarbonat und Kaliumiodid genannt. Das Filter kann auch ein adsorbierendes sein.

In der US 39 97 347-A wird ein Verfahren beschrieben, bei dem ein photographisches Waschwasser in Gegenwart von durch Polytetrafluorethen hydrophobierter Aktivkohle in einer Oxydationsvorrichtung mit warmer feuchter Luft behandelt und so das Thiosulfat zum Sulfat oxydiert wird. Danach wird das Wasser wieder zum Waschen der Filme verwendet. Bevorzugt werden die Filme jedoch mit Frischwasser nachgespült.

Die veröffentlichte Patentanmeldung JP-02 247 642-A beansprucht ein Verfahren, bei dem das aus dem Wässerungsteil der Entwicklungsmaschine überlaufende Wasser durch ein Adsorptionsfilter einem Reservoir zugeführt wird. Störende Bestandteile, z.B. Natriumthiosulfat, sollen durch das Adsorptionsfilter teilweise zurückgehalten werden. Ihre Konzentration steigt jedoch mit der Zeit so stark an, daß das Reservoir nach einiger Zeit entleert werden muß, wobei zuvor ein Reinigungsmittel zugefügt wird.

Ein Verfahren zur Oxydation von Waschwässern mit geringer Konzentration an Thiosulfaten ist auch in der DE 37 35 903-A1 beschrieben. Hierbei wird das Thiosulfat in Gegenwart eines Katalysators, der auf Aktivkohle als Trägermaterial aufgetragen sein kann, mit mindestens der stöchiometrischen Menge Wasserstoffperoxid in zwei Stufen umgesetzt.

Schließlich schlägt die internationale Anmeldung WO 92 01 635-A1 vor, Oxyanionen des Schwefels wie Thiosulfate katalytisch in Gegenwart eines protonierten Anionenaustauschers bei einem pH unterhalb von 8, vorzugsweise unterhalb von 3, zu elementarem Schwefel abzubauen. Das Verfahren zielt bevorzugt auf Lösungen mit mehr als 5 g Thiosulfat je Liter. Als Katalysator dient beispielsweise Kupfersulfid oder Silbersulfid.

Mit den bekannten Verfahren kann zwar die Konzentration des Thiosulfats im rückzuführenden Waschwasser verringert werden. Sie erfordern jedoch Hilfschemikalien, die genau, ggf. nach Analyse des Waschwassers, dosiert werden müssen, da sonst die Gefahr unerwünschter Wirkungen auf den verarbeiteten Film besteht. Der bei der katalytischen Zersetzung entstehende Schwefel kann im Waschwasser kolloidal in Lösung gehen und eine Verunreinigung des Films bei der Rückführung verursachen.

Schließlich ist es nach den bekannten Verfahren nicht sicher möglich, den Restgehalt des Films an Thiosulfat und gelöstem Silber sicher zu begrenzen.

Der Restthiosulfatgehalt, beispielsweise bestimmbar nach den Methoden der DIN 19 069, ist von entscheidender Bedeutung für die Lagerbeständigkeit der photographischen Bilder. In der Schicht zurückgebliebenes Thiosulfat zersetzt sich bei der Lagerung der Bilder und wandelt dabei das bildaufbauende metallische Silber in Silbersulfid um. Dies hat eine wesentlich geringere optische Dichte als das metallische Silber. Darüber hinaus kann an den hellen "Nichtbild"-Stellen aus dem am Thiosulfat komplex gebundenen Silber ebenfalls Silbersulfid und eine Dunkelfärbung hervorrufen. Beide Effekte vermindern den Bildkontrast; in extremen Fällen bis zum Verschwinden des Bildes. Für eine ausreichende Haltbarkeit, insbesondere bei medizinischen Röntgenfilmen und Dokumentenfilmen für Archivzwecke, werden Restthiosulfatgehalte von deutlich unter 5 µg/cm² gefordert.

Die Erfindung stellt sich die Aufgabe, ein Verfahren und eine Vorrichtung zur Rückführung des Waschwassers bei der Verarbeitung photographischer Silberhalogenid-Aufzeichnungsmaterialien anzugeben, die gegenüber den bekannten Verfahren vereinfacht sind und eine sichere Begrenzung des Restthiosulfatgehalts der verarbeiteten Filme ermöglichen.

Diese Aufgabe wird durch ein Verfahren nach dem Anspruch 1 und durch eine Vorrichtung nach dem Anspruch 13 gelöst.

Es wurde nämlich überraschenderweise gefunden, daß der Thiosulfat- und der Silbergehalt von rückgeführtem, sich in einem Kreislauf befindenden Waschwasser auch ohne Zusatz von Hilfschemikalien oder Oxydationsmitteln zu einem wesentlichen Teil entfernt wird, wenn das Waschwasser im Kreislauf durch ein Aktivkohlefilter geleitet wird. Darüber hinaus wurde gefunden, daß auch der Restthiosulfatgehalt der verarbeiteten Filme sich durch Eingliedern des Aktivkohlefilters in den Kreislauf vermindert.

Dieses Ergebnis war nach dem Stand der Technik nicht zu erwarten, da dort selbst bei Anwendung von Aktivkohle stets weitere Stoffe zum Zweck der Umsetzung, insbesondere der Oxydation, des Thiosulfats eingesetzt werden. Es ist auch keine besonders behandelte Aktivkohle erforderlich. Die Erfindung ermöglicht so eine beträchtliche Vereinfachung des Waschwasser-Rückführungsverfahrens.

In der Regel durchströmt das im Waschwasserkreislauf befindliche Waschwasser in einem einheitlichen Hauptstrom mindestens das Auswaschteil der Entwicklungsmaschine, das Aktivkohlefilter und eine Pumpe, die das Wasser wieder zum Auswaschteil fördert. In diesen Kreislauf können auch noch andere nach dem Stand der Technik übliche Bauteile eingegliedert werden, beispielsweise Partikelfilter zur Abtrennung von Feststoffteilchen aus dem Wasserstrom. Es ist aber auch möglich, das Aktivkohlefilter in einem Nebenstrom anzuordnen. Es können auch Vorrats- oder Pufferbehälter im Hauptstrom oder ggf. im Nebenstrom angeordnet sein.

Im solcherart geschlossenen Kreislauf reichern sich naturgemäß Neutralsalze, die insbesondere durch Umwandlung des Thiosulfats entstehen, an. Es daher notwendig, in einem gewissen Maße entweder kontinuierlich oder batchweise einen kleinen Teil des Kreislaufwassers durch Frischwasser zu ersetzen. Dieser Anteil ist jedoch gegenüber dem Stand der Technik so stark vermindert, daß die Entsorgung des Abwassers keine Schwierigkeiten macht.

Das Aktivkohlefilter wird als lose geschüttetes Filterbett angewendet. Hierdurch kann die anzuwendende Menge an Aktivkohle leicht den gegebenen Verhältnissen angepaßt werden und es sind keine für die Funktion unnötigen Verpackungs- oder Einschlußmittel notwendig, wie dies bei den gebräuchlichen Filterpatronen der Fall ist. Man benötigt lediglich einen im Gehäuse des Adsorptionsfilters oder an einer anderen Stelle des Kreislaufs angeordneten Einsatz, der bei einem erforderlichen Austausch des Aktivkohlefilters einfach entleert und neu befüllt werden kann.

Sowohl für die Wirkung als auch für die Standzeit des Aktivkohlefilters ist es günstig, wenn man eine relativ große Menge Aktivkohle anwendet. Bezogen auf die gesamte im Kreislauf befindliche Wassermenge arbeitet man bevorzugt mit 15 bis 150 g Aktivkohle je Liter.

In einer bevorzugten Ausführungsform der Erfindung werden die Abmessungen des Aktivkohlefilters so an die Strömungsgeschwindigkeit im Kreislauf angepaßt, daß die Filtrationsgeschwindigkeit zwischen 1 und 50 m/h liegt. Besonders bevorzugt ist der Bereich von 1 bis 10 m/h.

In einer anderen bevorzugten Ausführungsform wird die Strömungsgeschwindigkeit so bemessen, daß die Kontaktzeit des Waschwassers am Aktivkohlefilter bei jedem Umlauf 20 bis 1000 s, besonders bevorzugt 50 bis 500 s, beträgt.

Es wurde weiter gefunden, daß man besonders vorteilhafte Ergebnisse erhält, wenn man Aktivkohle verwendet, die durch Aktivierung von Steinkohle, Torf oder Holzkohle erzeugt wurde. Es ist günstig, wenn die Kohle eine Korngröße von etwa 1 bis 5 mm hat und die Teilchen so fest sind, daß nur geringer Abrieb auftritt. Damit wird vermieden, daß die Standzeit eines ggf. vorhandenen Partikelfilters sich durch Beladung mit Kohlenstaub verkürzt.

Es ist weiterhin bevorzugt, die Aktivkohle des Filters mit einem Katalysator für die Umwandlung des Thiosulfats zu beladen. Bekannte Katalysatoren für die Zersetzung von Thiosulfat sind beispielsweise Schwermetallsulfide wie Kupfer- oder Silbersulfid. Zwar ist nicht genau bekannt, welche Reaktionen das Thiosulfat an der Aktivkohle eingeht. Man fand jedoch eine günstige Wirkung bei Aktivkohle, die mit geringen Mengen Silbersulfid beladen worden war.

Weiterhin wurde beobachtet, daß die Wirkung des Aktivkohlefilters mit steigender Gebrauchsdauer zunächst zunimmt. Daher kann angenommen werden, daß sich durch Zersetzung der im Waschwasser enthaltenen Verunreinigungen ein geeigneter Katalysator bildet. Eine naheliegende Erklärung ist die Bildung von Silbersulfid aus Teilen des im Waschwasser enthaltenen Silbers und Thiosulfats. Man kann sich diese Wirkung zunutze machen, indem man bei nach längerem Gebrauch ggf. notwendigem Wechsel des Aktivkohlefilters der neuen Kohle ein Teil der gebrauchten und mit Katalysator beladenen beimischt.

Es ist günstig, wenn man den Waschwasserkreislauf auch während der Stillstandszeiten der photographischen Verarbeitungsanlage aufrechterhält. Dadurch erreicht man, daß die Reaktion am Aktivkohlefilter weitergeht und der Thiosulfatgehalt des Wassers noch weiter abnimmt.

Obwohl die Art der chemischen Umsetzung des Thiosulfats an der Aktivkohle nicht völlig klar ist, beobachtet man doch eine Anreicherung von Neutralsalzen, insbesondere von Sulfaten, im Kreislaufwasser. Dies ist jedoch kein Nachteil, sondern führt zu einer weiteren Verminderung des Restthiosulfatgehalts der verarbeiteten Filme. Daher wird bei einer weiteren bevorzugten Ausführungsform der Erfindung der Frischwasserzusatz so beschränkt, daß sich eine Sulfationenkonzentration von mindestens 5 g/l einstellt. Bei einer zu hohen Konzentration von Neutralsalzen besteht allerdings die Gefahr, daß das vom Film in die Trocknung verschleppte Waschwasser nach dem Trocknen sichtbare Salzkristalle oder -krusten hinterläßt. Die dadurch gegebene obere Grenze des Salzgehalts liegt aber nach praktischen Erfahrungen über 25 g Sulfat je l.

Wenn ein besonders niedriger Restthiosulfatgehalt auch schon bei Inbetriebnahme des Wasserkreislaufs erwünscht ist, kann man dem Frischwasser ein lösliches Sulfat, vorzugsweise Natriumsulfat, in einer Menge, die mindestens 5 g/l Sulfationen entspricht, zusetzen.

Beim erfindungsgemäßen Betrieb der Wasserrückführung ist die anfallende zu entsorgende Abwassermenge sehr gering und liegt in der Größenordnung von 100 ml je m² verarbeiteten Films. Das aus dem Waschwasserkreislauf entnommene Abwasser kann auch zum Ansetzen von Fixierbädern aus Konzentraten oder Salzpulvern verwendet werden. Damit kann eine Entsorgung des Abwassers überhaupt entfallen und die Menge des ohnehin zu entsorgenden Fixierbads wird nicht erhöht.

Überraschenderweise wird die Qualität der verarbeiteten Filme nicht beeinträchtigt, wenn man sie mit solcherart angesetztem Fixierbad und bei hohem Salzgehalt des Waschwasserkreislaufs verarbeitet.

Ein weiterer überraschender Vorteil des erfindungsgemäßen Verfahrens ist, daß die Trübung des im Kreislauf geführten Waschwassers während des Betriebs nicht kontinuierlich ansteigt, wie dies bei Verfahren nach dem Stand der Technik beobachtet wird. Insbesondere wenn man bei der Steuerung des Neutralsalzgehalts das Kreislaufwasser nicht vollständig durch Frischwasser ersetzt, sondern dieses kontinuierlich oder portionsweise dem Kreislauf zuführt, stellt sich ein stationärer Zustand mit sehr geringer Trübung ein.

Gegenstand der Erfindung ist auch eine Vorrichtung zur Durchführung des erfindungsgemäßen Verfahrens. In dieser Vorrichtung sind mindestens eine Pumpe (1), ein Reservoir (2) und ein Adsorptionsfilter (3) so angeordnet und miteinander verbunden, daß sie in dieser oder in anderer Reihenfolge nacheinander von dem im Kreislauf befindlichen Waschwasser durchströmt werden. Weiterhin ist die Vorrichtung so ausgebildet, daß sie mit Einlauf (5) und Auslauf (6) des Wässerungsteils (7) eines Entwicklungsgeräts zu einem geschlossenen Kreislauf (4) verbunden werden kann. Die Vorrichtung ist dadurch gekennzeichnet, daß das Adsorptionsfilter (3) als Aktivkohlebett ausgebildet und im Innern des Reservoirs (2) so angeordnet ist, daß es vom Wasserstrom durchströmt wird.

Im Kreislauf (4) können gegebenenfalls noch weitere Filter angeordnet sein, beispielsweise ein Filtergewebesack (8) zum Entfernen grober Teilchen aus dem Ausfluß des Wässerungsteils (7) und ein Kerzenfilter (9) zum Abtrennen feiner Aktivkohleteilchen.

Bevorzugt wird eine erfindungsgemäße Vorrichtung, bei der das Reservoir so bemessen ist, daß es mindestens die Hälfte des gesamten im Kreislauf befindlichen Waschwassers enthält. Dabei ist das im Auswaschteil des Verarbeitungsgeräts enthaltende Wasser mitgerechnet.

Das erfindungsgemäße Verfahren läßt sich bei photographischen Verarbeitungsverfahren sowohl in Tanks als auch in automatischen Entwicklungsmaschinen anwenden. Bei letzteren kann der Wässerungsvorgang beispielsweise durch Eintauchen in ein Wässerungsbad, durch Besprühen mit dem Waschwasser oder durch Kombination beider Verfahren bewirkt werden.

Weiter wurde beobachtet, daß auch die bei der Waschwasserrückführung häufig störende Schaumbildung unterblieb.

Das erfindungsgemäße Verfahren läßt sich bei der Verarbeitung von silberhalogenidhaltigen photographischen Aufzeichnungsmaterialien anwenden, insbesondere in der Schwarz-Weiß-Amateurfotografie, in der Reproduktionstechnik und in der medizinischen Diagnostik.

Die nachfolgenden Ausführungsbeispiele sollen die Erfindung noch weiter erläutern.

### Beispiel 1

Mittels einer handelsüblichen Entwicklungsmaschine für Reproduktionsfilme wurde ein Waschwasserkreislauf zusammengestellt, wobei man das aus dem Wässerungsteil der Entwicklungsmaschine überlaufende Wasser einem Reservoir zuführte, aus dem es durch einen Bodenablauf mittels einer Pumpe über ein Partikelfilter (5 µm) wieder den Sprühstäben des Wässerungsteils zugeleitet wurde. Die gesamte Wassermenge im Kreislauf einschließlich des Wässerungsteils betrug 50 l, von denen 30 l auf das Reservoir entfielen. Die Leistung der Pumpe, d.h. die Fließgeschwindigkeit im Kreislauf, betrug 3 l/min. Zur Abtrennung grober Teilchen wurde der Wasserstrom noch durch einen im Reservoir angeordneten Filtergewebesack (25 µm) geleitet. Diese Anordnung wird mit A bezeichnet.

Nun wurden in der Entwicklungsmaschine handelsübliche Reproduktionsfilme mit einem Silberauftrag von 3 - 5 g/m² und 50 % geschwärzten Bereichen verarbeitet. Nach Verarbeitung von jeweils 20 m² Film wurden im Kreislaufwasser der Gehalt an Silber und Thiosulfat und die Oberflächenspannung (Ringmethode) sowie in den verarbeiteten Filmen der Restthiosulfatgehalt nach DIN 19 069 (Jod-Stärke-Methode) bestimmt. Man beobachtete einen annähernd linearen Anstieg des Thiosulfat- und Silbergehalts mit der verarbeiteten Filmmenge.

Dieser Versuch wurde wiederholt, wobei zwischen Pumpe und Partikelfilter eine mit 400 g Aktivkohle gefüllte Adsorptionsfilterpatrone in den Kreislauf geschaltet war (Anordnung B). Der Anstieg der Analysenwerte in Abhängigkeit vom Filmdurchsatz war deutlich niedriger als bei Anordnung A und auch geringer als linear.

In einem weiteren Versuch wurde in den im Reservoir befindlichen Filtersack der Anordnung A 1 kg aus Steinkohle hergestellte Aktivkohle lose hineingeschüttet (Anordnung C). In Tabelle 1 sind die nach jeweils 100 m² Filmdurchsatz gemessenen Analysenwerte angegeben.

Es zeigt sich, daß die Aktivkohle im Kreislauf, insbesondere in der größeren Menge und als loses geschüttetes Bett, eine beträchtlichen Verminderung des Restthiosulfatgehalts im verarbeiteten Film bewirkt. Gleichzeitig wird eine geringere Schaumbildung und eine höhere Oberflächenspannung beobachet, was auf eine zumindest teilweise Entfernung der mitgeschleppten oberflächenaktiven Substanzen hinweist.

**Tabelle 1**

| Anordnung | Silber (mg/l) | Thiosulfat (mg/l) | Oberflächenspannung (mN/m) | Restthiosulfat (µg/cm²) |
|---|---|---|---|---|
| A | 103 | 2140 | 42 | 8,7 |
| B | 55 | 856 | 51 | 2,2 |
| C | 1,4 | 130 | 56 | 0,8 |

### Beispiel 2

In einem reproduktionstechnischen Betrieb wurde ein Waschwasserkreislauf entsprechend der Anordnung A aus Beispiel 1 an einer Entwicklungsmaschine für Hellraum-Kontaktfilme installiert. Zusätzlich wurde der Bodenablauf des Reservoirs mit einem Filtertuch abgedeckt und in den unteren Bereich des Reservoirs 5 kg Aktivkohle aus Steinkohle lose eingeschüttet. Die Gesamtwassermenge im Kreislauf betrug 60 l, die Fließgeschwindigkeit 3 l/min. In der Entwicklungsmaschine wurden pro Woche etwa 150 m² Film verarbeitet. Im gleichen Zeitraum wurden dem Kreislauf je 20 l Wasser entnommen, zum Ansetzen von Fixierbad verwendet und das Kreislaufvolumen mit Leitungswasser ergänzt. Der Versuch erstreckte sich über 7 Wochen. Dabei wurden folgende Analysenwerte beobachtet:

| | |
|---|---|
| Sulfatgehalt im Waschwasser | 10 - 25 g SO₄⁻⁻ je l |
| Thiosulfat | < 100 mg/l |
| Silber | < 1 mg/l |
| Restthiosulfat im Film | < 0,6 µg/cm² |

Die verarbeiteten Filme waren von guter Qualität und frei von Salzkrusten und anderen Verunreinigungen.

### Beispiel 3

In eine Lösung von 75 mg Silbersulfat in einem Gemisch von 245 ml Wasser und 5 g Schwefelsäure wurden 50 g Aktivkohle aus Torf eingerührt. Nach 1 h Rühren wurden 25 mg Natriumsulfid zugegeben und eine weitere Stunde gerührt. Nach Dekantieren der überstehenden Lösung wurde die Kohle dreimal mit je 250 ml Wasser gewaschen und bei 60 °C getrocknet.

Jeweils 5 g dieser Kohle wurden in eine Lösung eingetragen und gerührt, die durch Verdünnen von gebrauchtem Fixierbad mit Wasser im Volumenverhältnis 1+99 hergestellt worden war und je l 50 mg Silber und 1 g Thiosulfationen enthielt. Nach Ablauf der Versuchszeit wurde die Kohle abfiltriert und im Filtrat die Thiosulfatkonzentration bestimmt. Vergleichsversuche wurden mit unbehandelter Kohle des gleichen Typs durchgeführt. Man fand, daß die Thiosulfatkonzentration durch die mit Silbersulfid dotierte Kohle innerhalb von 15 min auf weniger als 10 % der Ausgangskonzentration vermindert wurde. Mit unbehandelter Kohle wurde dieser Wert erst nach 90 min erreicht.

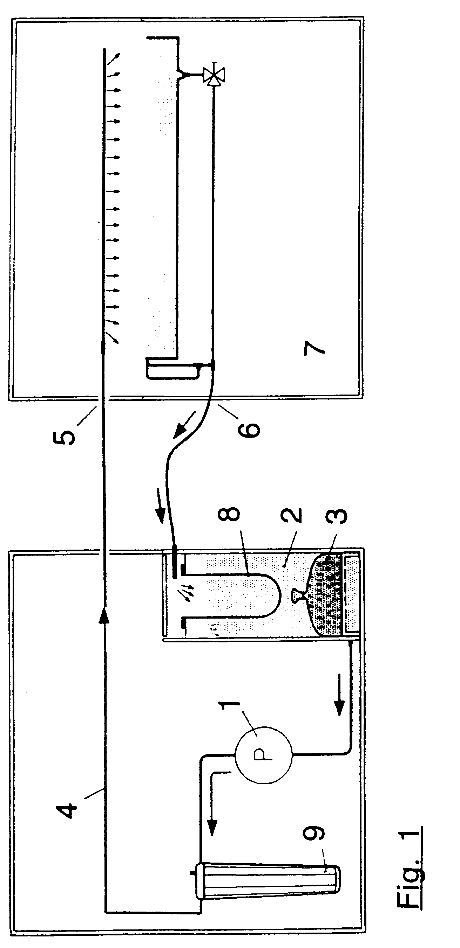

## Patentansprüche

1. Verfahren zur Rückführung des Waschwassers bei der Verarbeitung fotografischer Silberhalogenid-Aufzeichnungsmaterialien, bei dem das gebrauchte, vom Verarbeitungsgerät kommende Waschwasser durch ein Adsorptionsfilter geleitet und danach dem Verarbeitungsgerät wieder zugeführt wird, dadurch gekennzeichnet, daß
- das Adsorptionsfilter ein Aktivkohlefilter ist,
- das Aktivkohlefilter aus einem lose geschütteten Filterbett besteht und
- dem Wasser keine Hilfschemikalien oder Oxidationsmittel zugesetzt werden.

2. Verfahren nach Anspruch 1,
dadurch gekennzeichnet, daß
die Menge der Aktivkohle 15 bis 150 g je l des im Kreislauf befindlichen Wassers beträgt.

3. Verfahren nach Anspruch 1,
dadurch gekennzeichnet, daß
die Filtrationsgeschwindigkeit im Aktivkohlebett 1 bis 50, bevorzugt 1 bis 10 m/h beträgt.

4. Verfahren nach Anspruch 1,
dadurch gekennzeichnet, daß
die Kontaktzeit des Waschwassers mit dem Aktivkohlebett bei jedem Umlauf 20 bis 1000 s, bevorzugt 50 bis 500 s, beträgt.

5. Verfahren nach einem der Ansprüche 1 bis 4,
dadurch gekennzeichnet, daß
man Aktivkohle verwendet, die aus Torf, Steinkohle oder Holzkohle hergestellt wurde.

6. Verfahren nach einem der Ansprüche 1 bis 5,
dadurch gekennzeichnet, daß
die Aktivkohle mit einem Katalysator für die Zersetzung von Thiosulfat beladen ist.

7. Verfahren nach Anspruch 6,
dadurch gekennzeichnet, daß
der Katalysator Silbersulfid ist.

8. Verfahren nach Anspruch 6 oder 7,
dadurch gekennzeichnet, daß
der Katalysator durch Zersetzung von im Waschwasser enthaltenen Verunreinigungen erzeugt wird.

9. Verfahren nach einem der Ansprüche 1 bis 8,
dadurch gekennzeichnet, daß
der Waschwasserkreislauf auch während der Stillstandszeiten des Verarbeitungsgeräts aufrechterhalten wird.

10. Verfahren nach einem der Ansprüche 1 bis 9,
dadurch gekennzeichnet, daß
die Zufuhr von Frischwasser zum Kreislauf so beschränkt wird, daß die Konzentration der Sulfationen im Waschwasser mindestens 5 g/l beträgt.

11. Verfahren nach einem der Ansprüche 1 bis 9,
dadurch gekennzeichnet, daß
man nach dem vollständigen Ersatz des Kreislaufwassers durch Frischwasser diesem mindestens 5 g/l Sulfationen in Form eines löslichen Sulfats, vorzugsweise Natriumsulfats, zusetzt.

12. Verfahren nach einem der Ansprüche 1 bis 10,
dadurch gekennzeichnet, daß
man das aufgrund der kontinuierlichen oder batchweisen Zufuhr von Frischwasser ablaufende Kreislaufwasser zum Ansetzen von Fixierbad verwendet.

13. Vorrichtung zur Durchführung des Verfahrens nach einem der
vorangehenden Ansprüche, bestehend aus einem Kreislauf (4), der das Wässerungsteil (7) eines Verarbeitungsgeräts, eine Pumpe (1), ein Reservoir (2) und ein Adsorptionsfilter (3) enthält,
dadurch gekennzeichnet, daß
das Adsorptionsfilter (3) als Aktivkohlebett ausgebildet und im Innern des Reservoirs (2) angeordnet ist.

14. Vorrichtung nach Anspruch 14,
dadurch gekennzeichnet, daß
das Reservoir (2) mindestens die Hälfte des im Kreislauf befindlichen Wassers enthält.

## Claims

1. Process for recycling the washing water in the processing of photographic silver-halide recording materials, in which the used washing water coming from the processing unit is passed through an adsorption filter and then fed back to the processing unit, characterized in that
- the adsorption filter is an activated carbon filter,
- the activated carbon filter consists of a loose filter bed, and
- no auxiliary chemicals or oxidants are added to the water.

2. Process according to Claim 1, characterized in that the amount of activated carbon is from 15 to 150 g per 1 of the water in the circuit.

3. Process according to Claim 1, characterized in that the filtration rate in the activated carbon bed is from 1 to 50 m/h, preferably from 1 to 10 m/h.

4. Process according to Claim 1, characterized in that the contact time of the washing water with the activated carbon bed during each circuit is from 20 to 1000 seconds, preferably from 50 to 500 seconds.

5. Process according to one of Claims 1 to 4, characterized in that use is made of activated carbon produced from peat, hard coal or charcoal.

6. Process according to one of Claims 1 to 5, characterized in that the activated carbon has been loaded with a catalyst for the decomposition of thiosulphate.

7. Process according to Claim 6, characterized in that the catalyst is silver sulphide.

8. Process according to Claim 6 or 7, characterized in that the catalyst is produced by decomposition of impurities present in the washing water.

9. Process according to one of Claims 1 to 8, characterized in that the washing water circuit is also maintained during stoppage times of the processing unit.

10. Process according to one of Claims 1 to 9, characterized in that the supply of fresh water to the circuit is restricted in such a way that the concentration of sulphate ions in the washing water is at least 5 g/l.

11. Process according to one of Claims 1 to 9, characterized in that, after complete replacement of the circuit water by fresh water, at least 5 g/l of sulphate ions in the form of soluble sulphate, preferably sodium sulphate, are added thereto.

12. Process according to one of Claims 1 to 10, characterized in that the circuit water flowing out due to the continuous or batchwise supply of fresh water is used for making up the fixing bath.

13. Apparatus for carrying out the process according to one of the preceding claims, consisting of a circuit (4), which contains the washing part (7) of a processing unit, a pump (1), a reservoir (2) and an adsorption filter (3), characterized in that the adsorption filter (3) is in the form of an activated carbon bed and is arranged in the interior of the reservoir (2).

14. Apparatus according to Claim 14, characterized in that the reservoir (2) contains at least half of the water in the circuit.

## Revendications

1. Procédé pour le recyclage des eaux de lavage lors du traitement de matériaux d'enregistrement photographiques aux halogénures d'argent, dans lequel on guide les eaux de lavage consommées provenant de l'appareil de traitement, à travers un filtre d'adsorption, puis on les renvoie à l'appareil de traitement, caractérisé en ce que
- le filtre d'adsorption est un filtre au charbon actif,
- le filtre au charbon actif est constitué par un lit comprenant une matière de filtrage en vrac, et
- on n'ajoute à l'eau aucun produit chimique auxiliaire ou aucun agent d'oxydation.

2. Procédé selon la revendication 1, caractérisé en ce que la quantité de charbon actif s'élève de 15 à 150 g par litre de l'eau se trouvant en circulation.

3. Procédé selon la revendication 1, caractérisé en ce que la vitesse de filtration dans le lit de charbon actif s'élève de 1 à 50, de préférence de 1 à 10 m/h.

4. Procédé selon la revendication 1, caractérisé en ce que le temps de contact des eaux de lavage avec le lit de charbon actif à chaque cycle s'élève de 20 à 1.000 s, de préférence de 50 à 500 s.

5. Procédé selon l'une quelconque des revendications 1 à 4, caractérisé en ce qu'on utilise du charbon actif préparé à partir de tourbe, de houille ou de charbon de bois.

6. Procédé selon l'une quelconque des revendications 1 à 5, caractérisé en ce que le charbon actif est chargé avec un catalyseur pour la décomposition du thiosulfate.

7. Procédé selon la revendication 6, caractérisé en ce que le catalyseur est du sulfure d'argent.

8. Procédé selon la revendication 6 ou 7, caractérisé en ce que le catalyseur est formé par décomposition d'impuretés contenues dans les eaux de lavage.

9. Procédé selon l'une quelconque des revendications 1 à 8, caractérisé en ce que la mise en circulation de l'eau de lavage est également maintenue pendant les temps d'arrêt de l'appareil de traitement.

10. Procédé selon l'une quelconque des revendications 1 à 9, caractérisé en ce qu'on limite l'alimentation d'eau fraîche dans le circuit de telle sorte que la concentration des ions sulfate dans les eaux de lavage s'élève à au moins 5 g/l.

11. Procédé selon l'une quelconque des revendications 1 à 9, caractérisé en ce que, après le remplacement complet des eaux de lavage mise en circulation par de l'eau fraîche, on y ajoute au moins 5 g/l d'ions sulfate sous la forme d'un sulfate soluble, de préférence du sulfate de sodium.

12. Procédé selon l'une quelconque des revendications 1 à 10, caractérisé en ce qu'on utilise pour préparer le bain de fixage l'eau mise en circulation qui s'évacue sur base d'une alimentation d'eau fraîche en continu ou en discontinu.

13. Dispositif pour la mise en oeuvre du procédé selon l'une quelconque des revendications précédentes, constitué par un circuit (4) qui contient la section de lavage (7) d'un appareil de traitement, une pompe (1), un réservoir (2) et un filtre d'adsorption (3), caractérisé en ce que le filtre d'adsorption (3) est réalisé sous la forme d'un lit de charbon actif et est disposé à l'intérieur du réservoir (2).

14. Dispositif selon la revendication 13, caractérisé en ce que le réservoir (2) contient au moins la moitié de l'eau se trouvant dans le circuit.
